# FASCICULE DE BREVET EUROPEEN

(11) **EP 0 676 379 B1**
(45) Date de publication et mention de la délivrance du brevet: **11.12.2002**
(21) Numéro de dépôt: 95400820.7
(22) Date de dépôt: 11.04.1995
(51) Int. Cl.: C03C 17/36, C03C 23/00

(54) **Technique de fabrication d'une plaque de verre revêtue d'une couche d'argent semi-réfléchissante**
Herstellungsverfahren für eine mit einer halbreflektierenden Silberschicht bekleideten Glassscheibe
Production technique for a glass plate coated with a semi-reflective silver layer

(30) Priorité: 11.04.1994 DE 4412318
(43) Date de publication de la demande: 11.10.1995
(73) Titulaire: SAINT-GOBAIN GLASS FRANCE, 92400 Courbevoie (FR)
(72) Inventeur: Schicht, Heinz, Dr., D-06925 Bethau (DE); Schmidt, Uwe, D-04895 Falkenburg/Eister (DE); Schindler, Herbert, D-04860 Torgau (DE); Berg, Klaus-Jürgen, Dr., D-06130 Halle (DE); Kaiser, Wilfried, D-04860 Torgau (DE); Ditzel, Gerhard, D-04860 Welsau (DE)
(74) Mandataire: Muller, René

(56) Documents cités:
- EP-A- 0 464 789
- EP-A- 0 506 507
- EP-A- 0 546 470
- EP-A- 0 599 071
- DATABASE WPI Section Ch, Week 9526 Derwent Publications Ltd., London, GB; Class L03, AN 95-197239 & JP-A-07 114 841 ( TOSHIBA KK) , 2 Mai 1995

## Description

Le domaine de l'invention est celui des couches minces déposées sur le verre et plus particulièrement des multicouches dont l'argent est l'élément fonctionnel.

L'invention concerne l'application d'un traitement thermique d'un verre équipé d'une telle couche à la diminution de l'émissivité de la couche d'argent.

On connaît un traitement du même type dans la demande EP-A-506507 où le traitement thermique sert à chauffer la plaque de verre jusqu'à sa température de bombage et/ou de trempe, afin de bomber et/ou de tremper ultérieurement la plaque revêtue de sa couche multiple. Dans ce cas, le traitement thermique s'effectue à la température de 600 °C à 680 °C.

Lorsque la couche fonctionnelle de revêtement de la plaque de verre est une couche métallique en argent, celle-ci est ordinairement enrobée entre des couches d'oxyde métallique servant de revêtement antireflet et anti-corrosion. Lorsque les plaques de verre munies de ce type de système de couches doivent subir un traitement thermique, on dépose en outre une couche métallique ou une couche d'oxyde métallique, oxydée de manière sous-stoechiométrique, au moins entre la couche d'argent et la couche supérieure d'oxyde métallique, afin de retenir l'oxygène diffusé dans ledit système au cours du traitement, et de protéger la couche d'argent de l'oxygène, car il est avéré que cette dernière est altérée par la diffusion de l'oxygène. Une protection particulièrement efficace de la couche est obtenue lorsqu'une couche métallique ou d'oxyde métallique, oxydée de manière sous-stoechiométrique, est également disposée en-dessous de la couche d'argent, c'est-à-dire entre celle-ci et la couche d'oxyde métallique adhésive et antireflet.

Ce type de systèmes à cinq couches se prêtant bien à un traitement thermique ultérieur est par exemple connu de la demande EP-A-506507 citée plus haut. On sait également que le traitement thermique consécutif entraîne un accroissement de la transmission de la plaque de verre ainsi revêtue. Cette élévation bien connue de la transmission par traitement thermique à haute température est due au fait que les couches protectrices métalliques interposées se transforment en couches plus oxydées qui se caractérisent par une transmission plus élevée comparées aux couches incluant des métaux non oxydés très absorbants. Il est également comparées aux couches incluant des métaux non oxydés très absorbants. Il est également établi que des fonctions essentielles de la couche d'argent proprement dite, notamment ses propriétés de transmission dans la bande spectrale visible, sa réflectance pour les rayons IR et son émissivité ne sont pas modifiées de manière sensible par le traitement thermique nécessaire au bombage et/ou à la trempe de la plaque de verre.

Il est par ailleurs connu de la demande de brevet EP-0 464 789 A1 un revêtement bas-émissif sur du verre comprenant une alternance de couches de métal et d'oxyde de zinc.

Lorsque des plaques de verre comportant des systèmes à couches semi-réfléchissants doivent être utilisés pour améliorer les performances d'un vitrage d'isolation thermique, elles doivent en particulier présenter une émissivité faible d'une valeur ≤ 0,1. De plus, on souhaite en général qu'elles possèdent une transmission élevée dans le spectre visible et une faible réflexion, et qu'elles aient en particulier une couleur neutre en réflexion. Ce type de plaques de verre munies de leur revêtement trouve surtout une application dans les vitrages isolants à caractéristiques d'isolation thermique supérieures. Pour une structure définie des vitrages isolants, le coefficient de transmission thermique k est essentiellement déterminé par l'émissivité ε des deux surfaces des plaques délimitant l'espace à l'intérieur du vitrage isolant. Ce coefficient, qui atteint la valeur ε = 0,85 pour des surfaces de verre non recouvertes, peut être abaissé à la valeur ε ≤ 0,1 grâce à des couches fonctionnelles à base d'argent. Il est ainsi possible de fabriquer des vitrages isolants au coefficient k de 1,3 W/m²K et moins, ce qui permet de réaliser des économies d'énergie considérables.

Comme on le sait, afin d'obtenir une amélioration supplémentaire du coefficient k, on peut parvenir à une réduction du pouvoir émissif grâce à des couches d'argent plus épaisses. Dans ce cas, l'inconvénient est cependant que la transmission est plus faible dans le visible, ce qui n'est généralement pas souhaitable.

L'objet de la présente invention est de concevoir un procédé de fabrication d'une plaque de verre munie d'un système multicouches comportant une couche fonctionnelle en argent qui permette de diminuer l'émissivité de la plaque ainsi revêtue pour une transmission élevée dans le domaine de la lumière visible.

L'objet de l'invention est un procédé de diminution de l'émissivité d'une couche d'argent enrobée entre des couches d'oxyde métallique déposées par pulvérisation cathodique sur une plaque de verre. Les couches d'oxyde sont en SnO2 et le procédé consiste en un traitement thermique à une température comprise entre 250 et 450°C, de préférence entre 350 et 400°C. la durée du traitement est avantageusement de 1 à 15 minutes.

Ainsi, le procédé selon l'invention permet, avec des couches relativement minces, à forte transmission par suite de leur faible épaisseur relative, de parvenir à des valeurs d'émission relativement faibles, comparables à celles qui peuvent être obtenues dans l'état actuel de la technique, uniquement avec des couches d'argent plus épaisses et en conséquence avec une plus faible transmission de la lumière. En outre, il est apparu que le traitement thermique selon l'invention, non seulement diminue l'émissivité de la couche fonctionnelle, mais entraîne par ailleurs un accroissement des valeurs de transmission de cette dernière.

Des essais ont établi que les améliorations des caractéristiques des couches réalisées par le traitement thermique selon l'invention peuvent être partiellement ou totalement annulées lorsque la couche d'argent est ensuite chauffée à une température supérieure à 450°C. Par conséquent, lorsqu'un traitement de la plaque de verre à une température plus élevée que celle définie par l'invention est nécessaire, par exemple pour le bombage ou la trempe du verre, il est intéressant que le traitement thermique de l'invention ne soit seulement effectué qu'à la suite de ces opérations, par exemple par interruption du processus de refroidissement dans la plage de température mentionnée ou par réchauffement après refroidissement de la plaque de verre.

Le résultat du procédé selon l'invention est étonnant, et son mode d'action n'a pas encore été entièrement éclairci. Les effets observés laissent cependant conclure que certaines modifications de la structure de la couche d'argent sont induites par le traitement thermique. Les phénomènes constatés pourraient éventuellement s'expliquer par une modification de la structure atomique de la couche d'argent. En effet, il semble que dans le dépôt d'argent réalisé par pulvérisation cathodique, le métal se trouve à la fois sous forme atomique et sous forme ionique et colloïdale, et que les composantes de ces différents états sont modifiées par le traitement, ces modifications semblant être réversibles lorsque la température continue de s'accroître. Il semble alors que l'argent colloïdal ait un effet négatif sur la transmission et l'émissivité, et que cette forme métallique soit partiellement ou totalement transformée en argent métallique et atomique par le traitement thermique selon l'invention.

Les effets obtenus par l'invention devant pour l'essentiel être uniquement attribués à des modifications à l'intérieur de la couche , il suffit de chauffer cette dernière, de sorte qu'il est possible le cas échéant de ne pas procéder à un réchauffement de la totalité de la plaque de verre pour des raisons énergétiques. Ce réchauffement ciblé de la couche peut par exemple être obtenu au moyen de rayons électro-magnétiques qui sont absorbés de manière sélective par cette dernière. Mais il est bien entendu également possible, le cas échéant, de porter l'ensemble de la plaque de verre aux températures exigées dans un four traditionnel de traitement thermique. Par exemple, ce traitement peut s'effectuer dans un four continu approprié qui fait suite à la ligne de déposition.

L'avantage particulier du procédé selon l'invention réside dans le fait que des couches à émissivité très faible sont obtenues de manière assez simple, c'est-à-dire que ce sont des couches relativement minces qui se caractérisent, par suite, par une transmission relativement élevée. Comme le montrent les résultats expérimentaux, la transmission est même accrue par le traitement thermique. Les couches d'argent prévues par l'invention pouvant être nettement moins épaisses comparées à d'autres systèmes de couches à faible émissivité, il en résulte ainsi une économie substantielle de ce métal coûteux.

L'invention sera décrite ci-après de manière plus détaillée au moyen de quelques exemples de réalisation mis en parallèle avec d'autres exemples comparables :

### Exemple comparatif 1

Pour la fabrication d'une couche protectrice isolante, une plaque de verre flotté de 4 mm d'épaisseur est introduite dans une installation continue de pulvérisation cathodique à cinq emplacements cathodiques successifs et munie de la structure de couches suivante :

| | |
|---|---|
| Couche antireflet | 27 nm Sn0₂ |
| Couche protectrice inférieure | 2 nm 80/20 NiCr |
| Couche d'argent | 9 nm Ag |
| Couche protectrice supérieure | 3 nm 80/20 NiCr |
| Couche de finition | 30 nm Sn0₂ |

La plaque ainsi revêtue présente une émissivité de ε = 0,09, une réflexion à 700 nm de R = 6,5% et une transmission à 550 nm de T = 84,6%.

Cette plaque de verre flotté ainsi revêtue, la face recouverte vers l'intérieur, est disposée vis à vis d'une autre plaque de 4 mm d'épaisseur non revêtue pour former un vitrage isolant, l'écart entre les deux plaques étant de 16 mm et l'espace intérieur rempli d'argon. Le vitrage isolant ainsi constitué possède un coefficient d'échange thermique de k = 1,30 W/m²K.

### Exemple selon l'invention 1a

Une plaque de verre flotté du même type que celle décrite dans l'exemple comparatif 1, avec la même structure et des caractéristiques physiques identiques est introduite dans un four fermé à atmosphère d'azote chauffée à la température de 350 °C pendant 15 minutes et ensuite refroidie à la température ambiante.

Puis, les propriétés citées plus haut sont de nouveau mesurées, et l'on obtient les valeurs suivantes : émissivité ε = 0,05-0,06, réflexion à 700 nm R = 13%, transmission à 550 nm T = 87,3%.

Cette plaque thermiquement traitée est assemblée dans les mêmes conditions que celles de l'exemple comparatif pour former un vitrage isolant. L'espace interne de ce dernier est également rempli d'argon. Le vitrage a été mesuré, il possède un coefficient d'échange thermique de k = 1,17. Cela correspond au coefficient k d'un vitrage isolant comparable muni d'une couche d'argent d'environ 13 nm d'épaisseur (au lieu de 9 ici) et d'une transmission correspondante sensiblement inférieure de 80,3% à 550 nm.

### Exemple selon l'invention 1b

Une plaque de verre flotté de 4 mm d'épaisseur ayant la même structure de couches que celle de l'exemple comparatif 1 et les mêmes propriétés physiques est portée à la température de 350° C pendant 5 minutes dans une atmosphère d'ambiance normale et ensuite refroidie à la température ambiante.

Les caractéristiques précédemment citées sont de nouveau mesurées et les valeurs suivantes sont obtenues : émissivité ε = 0,06, réflexion à 700 nm R = 12%, transmission à 550 nm T = 86,5%.

La plaque de verre thermiquement traitée est assemblée pour constituer un vitrage isolant dans les mêmes conditions que celles décrites dans l'exemple comparatif. Il est de nouveau rempli d'argon. La mesure du coefficient k indique de nouveau une valeur de 1,17 W/m²K.

### Exemple comparatif 2

Pour la fabrication d'un vitrage isolant trempé, on a déposé une couche dans sa variante trempable, il s'agit d'une plaque de verre flotté de 6 mm d'épaisseur, placée dans une installation de pulvérisation cathodique en continu à cinq emplacements cathodiques successifs, elle est munie de la structure à couches suivante :

| | |
|---|---|
| Couche antireflet | 40 nm Sn0₂ |
| Couche protectrice inférieure | 2 nm 80/20 NiCr |
| Couche d'argent | 10 nm Ag |
| Couche protectrice supérieure | 60 nm 80/20 NiCr |
| Couche de finition | 40 nm Sn0₂ |

La plaque de verre flotté ainsi revêtue indique une émissivité ε de 0,09, une réflexion à 700 nm de R = 10% et une transmission à 550 nm de T = 70%.

La plaque de verre munie de ses couches est maintenue à l'air immobile pendant 7 minutes, à la température de 680 °C, et ensuite refroidie à la température ambiante. Ce traitement thermique est identique à celui qui est nécessaire au bombage et/ou à la trempe d'une plaque de verre.

Puis, les mêmes caractéristiques déjà citées sont de nouveau mesurées, et les valeurs suivantes sont obtenues : émissivité ε *=* 0,13, réflexion à 700 nm R = 7%, et transmission à 550 nm T = 83%. Par rapport aux valeurs initiales, l'émissivité s'est donc nettement dégradée, elle est plus élevée, tandis que la transmission est par contre très supérieure par suite de l'oxydation de la couche protectrice supérieure. Compte tenu de son émissivité relativement élevée, cette plaque de verre est moins bien adaptée à la fabrication d'un vitrage isolant à caractéristiques de protection thermique améliorées.

### Exemple selon l'invention 2

La plaque de verre flotté fabriquée selon l'exemple comparatif 2, thermiquement traitée à 680° C et munie des couches mentionnées, est soumise après son refroidissement à la température ambiante, au traitement thermique selon l'invention, ce qui consiste à la chauffer à la température de 350 °C dans l'air immobile pendant 15 minutes.

Après refroidissement à la température ambiante, les caractéristiques déjà citées sont de nouveau mesurées et l'on obtient les valeurs suivantes : émissivité ε = 0,06, réflexion à 700 nm R = 12%, et transmission à 550 nm T = 86,5%. Par comparaison avec l'état avant le traitement selon l'invention, on constate ainsi une forte diminution de l'émissivité, et de plus un accroissement notable de la transmission de 3,5%. De cette manière, des vitrages isolants à caractéristiques d'isolation thermique élevées peuvent aussi être fabriquées, dans lesquels chacune des plaques munie de ses couches est thermiquement trempée, c'est-à-dire qu'elle est constituée de verre du type Sécurit.

### Série d'exemples 3

Dans une autre série d'expériences, on a regardé l'influence d'un traitement thermique selon l'invention sur une grandeur physique, la résistance par carré (R□) qui est, dans le cas de l'argent, proportionnelle à l'émissivité ε.

Sur du verre flotté de 4 mm, on a déposé la multicouche suivante :

| | |
|---|---|
| Couche antireflet | Sn0_{2,} 27 nm |
| Couche protectrice inférieure | NiCr 80/20, 2 nm |
| Couche d'argent | Ag, 13 nm |
| Couche protectrice supérieure | NiCr 80/20, 3 nm |
| Couche de finition | Sn0₂ , 30 nm |

Des échantillons de 50 x 50 mm2 ont été découpées, et on a mesuré leur résistance, R□ avec un ohmmètre à quatre pointes et on a trouvé une valeur de 8 Ω/□. On a alors installé successivement chaque échantillon dans un support isolant et on a appliqué le long de deux côtés opposés une électrode en cuivre qui pressait sur la couche, d'un bout à l'autre sur 50 mm de côté. Une des électrodes était réunie au pôle + d'une source de courant continu de tension variable et l'autre au pôle -.

Chaque échantillon était soumis à une puissance donnée (de 30 à 40 W) pendant des durées telles qu'on pouvait atteindre grâce à ce chauffage par effet Joule, des températures mesurées sur le verre à la fin du chauffage qui s'étendaient de 130 à 170°C. Il n'a malheureusement pas été possible de déterminer quelle avait été la température atteinte au coeur de la couche. On peut l'estimer comprise entre 200 et 250°.

Les résultats des mesures de résistance R□ après traitement et après retour à la température ambiante ont montré que plus la température de traitement était haute, plus la diminution de la résistance était sensible, des températures de verre de 160-170°C fournissant des résistances de 6,3 Ω /□. Mais, même pour des températures de verre plus basses, telles que 130°C, on constate une baisse de la résistance jusqu'à 7,5 Ω/□.

Cette deuxième série d'expériences avec suivi de l'évolution de la résistance -toujours associée pour l'homme du métier à une évolution de l'émissivité de la couche d'argent-montre tout comme la première série, l'effet inattendu du traitment thermique de l'invention.

## Revendications

1. Procédé de diminution de l'émissivité d'une couche d'argent enrobée entre des couches d'oxydes métalliques déposée par pulvérisation cathodique sur une plaque de verre, **caractérisé en ce que** les oxydes métalliques sont en SnO₂ **et en ce que** le procédé consiste en un traitement thermique à une température comprise entre 250 et 450°C.

2. Procédé selon la revendication 1, **caractérisée en ce que** le traitement thermique est effectué à des températures variant entre 350°C et 400°C.

3. Procédé selon la revendication 1 ou la revendication 2, **caractérisée en ce que** le traitement thermique se déroule sur un laps de temps variant de 1 à 15 minutes.

4. Procédé selon l'une quelconque des revendications 1 à 3, **caractérisé en ce que** le traitement thermique s'effectue par exposition des couches à un rayonnement électromagnétique principalement absorbé par lesdites couches.

5. Procédé selon l'une quelconque des revendications 1 à 3, **caractérisé en ce que** la plaque de verre munie de la couche est chauffée dans sa totalité pour atteindre la température nécessaire au traitement thermique.

6. Procédé selon l'une quelconque des revendications 1 à 5, **caractérisée en ce que** la plaque de verre est d'abord portée à la température caractéristique pour la bomber dans le cas de bombage thermique, et **en ce que** le traitement thermique est effectué au cours de l'opération de refroidissement ou à la suite de ce dernier.

7. Procédé selon l'une quelconque des revendications 1 à 5, **caractérisée en ce que** la plaque de verre utilisée dans la fabrication d'une plaque trempée chimiquement ou d'une plaque bombée et trempée est d'abord chauffée à sa température de bombage et de trempe et, le cas échéant, est trempée par refroidissement brutal après l'opération préalable de bombage, et **en ce que** le traitement thermique de la couche s'effectue par réchauffement à la suite de l'opération de trempe.

## Patentansprüche

1. Verfahren zur Verringerung des Emissionsvermögens einer zwischen Schichten aus Metalloxiden eingebetteten Silberschicht, wobei die Schichten mittels Kathodenzerstäubung auf einer Glasscheibe abgebracht wurden, **dadurch gekennzeichnet, dass** die Metalloxide aus SnO₂ bestehen, und dadurch, dass das Verfahren eine Wärmebehandlung bei Temperaturen zwischen 250 °C und 450 °C umfasst.

2. Verfahren nach Anspruch 1, **dadurch gekennzeichnet, dass** die Wärmebehandlung bei Temperaturen zwischen 350 °C und 400 °C durchgeführt wird.

3. Verfahren nach Anspruch 1 oder 2, **dadurch gekennzeichnet, dass** die Wärmebehandlung über einen Zeitraum von 1 bis 15 Minuten erfolgt.

4. Verfahren nach einem der Ansprüche 1 bis 3, **dadurch gekennzeichnet, dass** die Wärmebehandlung der Schichten durch Beaufschlagung mit elektromagnetischer, im Wesentlichen von den Schichten absorbierter Strahlung erfolgt.

5. Verfahren nach einem der Ansprüche 1 bis 3, **dadurch gekennzeichnet, dass** die mit der Mehrfachschicht versehene Glasscheibe insgesamt auf die für die Wärmebehandlung erforderliche Temperatur erwärmt wird.

6. Verfahren nach einem der Ansprüche 1 bis 5, **dadurch gekennzeichnet, dass** zur Herstellung einer gebogenen Glasscheibe die Glasscheibe zunächst auf Biegetemperatur erwärmt und gebogen wird, und dass während des Abkühlvorgangs oder im Anschluss daran die Wärmebehandlung erfolgt.

7. Verfahren nach einem der Ansprüche 1 bis 5, **dadurch gekennzeichnet, dass** zur Herstellung einer chemisch vorgespannten Glasscheibe oder einer gebogenen und vorgespannten Glasscheibe die Glasscheibe zunächst auf Biege- bzw. Vorspanntemperatur erwärmt und gegebenenfalls nach einem vorausgehenden Biegevorgang durch schroffes Abkühlen thermisch vorgespannt wird, und dadurch, dass die Wärmebehandlung der Schicht durch erneutes Erwärmen im Anschluss an den Vorspannprozess erfolgt.

## Claims

1. Process for reducing the emissivity of a silver coating enveloped between metal oxide coatings deposited by cathodic sputtering on a glass plate, **characterized in that** the metal oxides are of SnO₂ and **in that** the process consists of a heat treatment at a temperature between 250 and 450°C.

2. Process according to claim 1, **characterized in that** the heat treatment takes place at temperatures varying between 350 and 400°C.

3. Process according to claim 1 or 2, **characterized in that** the heat treatment takes place over a time period varying between 1 and 15 minutes.

4. Process according to any one of the claims 1 to 3, **characterized in that** the heat treatment takes place by exposing coatings to electromagnetic radiation mainly absorbed by said coatings.

5. Process according to any one of the claims 1 to 3, **characterized in that** the glass plate provided with the coating is entirely heated so as to reach the temperature necessary for the heat treatment.

6. Process according to any one of the claims 1 to 5, **characterized in that** the glass plate is firstly raised to the characteristic temperature for bending it in the case of thermal bending and **in that** the heat treatment is carried out during or following the cooling operation.

7. Process according to any one of the claims 1 to 5, **characterized in that** the glass plate used in the production of a chemically tempered plate or a bent and tempered plate is firstly heated to its bending and tempering temperature and, if appropriate, is tempered by sudden cooling following the prior bending operation and **in that** the heat treatment of the coating takes place by reheating at the end of the tempering operation.
